# EUROPÄISCHE PATENTSCHRIFT

(11) **EP 3 472 493 B1**
(45) Veröffentlichungstag und Bekanntmachung des Hinweises auf die Patenterteilung: **08.07.2020**
(21) Anmeldenummer: 17748913.5
(22) Anmeldetag: 21.06.2017
(51) Int. Cl.: F16H 21/12

(54) **VORRICHTUNG ZUR KRAFTÜBERTRAGUNG**
DEVICE FOR FORCE TRANSMISSION
DISPOSITIF DE TRANSMISSION DE FORCE

(30) Priorität: 21.06.2016 DE 102016111342; 24.06.2016 DE 102016111610
(43) Veröffentlichungstag der Anmeldung: 24.04.2019
(73) Patentinhaber: KKD - Getriebebau UG, 71287 Weissach (DE)
(72) Erfinder: PLATH, Klaus, 08132 Mülsen (DE)
(74) Vertreter: Hornig, Leonore
(86) Internationale Anmeldenummer: PCT/IB2017/000864
(87) Internationale Veröffentlichungsnummer: WO 2017/221062

(56) Entgegenhaltungen:
- EP-A1- 0 093 305
- WO-A1-2016/083467
- GB-A- 2 219 639

## Beschreibung

Die Erfindung betrifft eine Vorrichtung zur Kraftübertragung gemäß dem Oberbegriff des beigefügten Hauptanspruches. Eine derartige Vorrichtung ist z.B. aus der GB 2 219 639 A bekannt. Sie kann zwischen einer Antriebsvorrichtung, wie einem Fahrrad, einem Planetenradgetriebe, einem Elektromotor, einem Kurbelgetriebe etc. und einem Getriebe, wie einem Schaltgetriebe eines Kraftfahrzeugs oder eines Fahrrads, oder einer Abtriebsvorrichtung zur besseren Kraftübertragung angeordnet werden.

Der Erfindung liegt die Aufgabe zugrunde, eine Vorrichtung zu Kraftübertragung zu schaffen, die vielseitig einsetzbar ist und eine gute Kraftübertragung bewirkt.

Diese Aufgabe wird durch eine Vorrichtung mit den Merkmalen des Patentanspruchs 1 gelöst. Es sind eine Antriebsplatte, einer Trägerplatte und eine Abtriebsplatte vorgesehen, die jeweils in einem Bereich um ihren Mittelpunkt eine Drehlagerung aufweisen, mit welcher sie jeweils drehbar auf einer Zentralachse übereinander angeordnet sind. Auf der Trägerplatte ist eine Hauptgleitschiene beabstandet zu der Drehlagerung der Trägerplatte angeordnet, die ein festes Teil aufweist, das fest mit der Trägerplatte verbunden ist und ein bewegliches Teil, das gegenüber dem festen Teil in Richtung der Längsachse der ersten Hauptgleitschiene bewegbar ist. Es ist ein erstes Antriebs-Zugelement vorgesehen, welches an einem ersten Ende über ein erstes Antriebszug-Verbindungselement drehbar mit dem beweglichen Teil der ersten Hauptgleitschiene und an einem zweiten Ende über ein zweites Antriebszug-Verbindungselement drehbar mit der Antriebsplatte verbunden ist. Ein erstes Gegenkraftelement ist derart angeordnet, dass bei einer vorgegebenen auf das Antriebs-Zugelement wirkenden Antriebskraft über das Gegenkraftelement eine Gegenkraft auf das bewegliche Teil der ersten Hauptgleitschiene erzeugt wird, derart dass die aus Antriebskraft und Gegenkraft auf die erste Hauptgleitschiene wirkende Gesamtkraft sowohl eine parallele als auch eine vertikale Komponente zu der Längsachse der ersten Hauptgleitschiene aufweist, die zu einer Drehbewegung der mit der ersten Hauptgleitschiene verbunden Trägerplatte in eine vorgegebene Drehrichtung führt. Diese Gesamtkraft wirkt somit schräg zur Längsachse der ersten Hauptgleitschiene. Üblicherweise ist eine Drehbewegung im Urzeigersinn erwünscht. Entsprechend wird die Richtung der Gesamtkraft so gewählt, dass eine Drehbewegung der Trägerplatte im Urzeigersinn erfolgt. Die Gesamtkraft wird mit anderen Worten so gewählt, als würde sie die erste Hauptgleitschien in eine Drehbewegung um deren Mittelpunkt in die vorgegebene Drehrichtung bewirken. Da die erste Hauptgleitschiene mit dem festen Teil fest mit der Trägerplatte verbunden ist, bewirkt die Gesamtkraft eine Drehung der Trägerplatte, mit der sich die erste Hauptgleitschiene entlang einer kreisförmigen Bahn um den Mittelpunkt der Trägerplatte mitbewegt. Beim Angreifen der Antriebskraft bewirkt die zu der Längsachse der ersten Hauptgleitschiene parallele Komponente der Gesamtkraft zusätzlich eine Bewegung des beweglichen Teils der ersten Hauptgleitschiene in deren Längsrichtung gegenüber dem festen Teil. Diese Bewegung bewirkt eine weitere Kraftübertragung auf die Trägerplatte, die zu einer schnelleren Drehung der Trägerplatte führt.

Es ist ein erstes Kraftübertragungselement, derart auf der Trägerplatte angeordnet ist, dass es bei der Drehbewegung der Trägerplatte eine Drehkraft-Übertragungsverbindung mit dem beweglichen Teil der ersten Hauptgleitschiene zur Kraftübertragung auf dieses bewirkt. Hierdurch werden die an der Trägerplatte, aufgrund der Drehung und Verschiebung der ersten Hauptgleitschiene, wirkenden Kräfte, wieder auf das bewegliche Teil der ersten Hauptgleitschiene übertragen.

Mit einem ersten Abtriebselement, das an einem ersten Ende mit der Abtriebsplatte verbunden und derart angeordnet ist, dass bei die Drehbewegung der Trägerplatte eine Abtriebskraft-Übertragungsverbindung von dem beweglichen Teil der ersten Hauptgleitschiene auf das Abtriebselement besteht, kann die Kraft auf die Abtriebsplatte übertragen werden. Dies hat den weiteren Vorteil, dass im Falle eines Defekts in der Lagertechnik der ersten Hauptgleitschiene die Vorrichtung grundsätzlich auch weiterhin funktioniert und nur auf die Kraftübertragung durch das erste Kraftübertragungselement verzichtet werden muss.

Es ist vorteilhaft, wenn als Antriebs-Zugelement ein stegartiges Element verwendet wird, wie beispielsweise ein Flachmaterial. Als Verbindungselemente können bevorzugt Bolzen verwendet werden.

Auch ist es vorteilhaft, wenn die erste Hauptgleitschiene symmetrisch zu einer horizontalen Achse durch den Mittelpunkt der Trägerplatte angeordnet ist, und in einem mittleren Bereich des beweglichen Teils der ersten Hauptgleitschiene ein erstes Querelement vorgesehen ist, das quer zur Längsachse der ersten Hauptgleitschiene über die erste Hauptgleitschiene übersteht, derart dass das erste Kraftübertragungselement bei der Drehbewegung der Trägerplatte an das erste Querelement anschlägt. Als Kraftübertragungselement kann ein Bolzen verwendet werden, der auf der Trägerplatte an einer geeignet gewählten Position befestigt ist. Somit kann die Kraftübertragung zuverlässig und mit einfacher Bauweise erfolgen kann. Die Position des Kraftübertragungselements kann auf der Trägerplatte je nach Anordnung der Hauptgleitschiene geeignet gewählt werden, so dass die Kraftübertragung auf das bewegliche Teil der Gleitschien gewährleistet ist.

Vorteilhafterweise wird die Anordnung, insbesondere die Anordnung des Antriebs-Zugelements und des Gegenkraftelements so gewählt, dass das bewegliche Teil der Hauptgleitschiene nur eine kleine Bewegung in Längsrichtung ausführt, die kleiner als 5 cm, bevorzugt kleiner als 1/100 mm ist.

Gemäß einem vorteilhaften Ausführungsbeispiel der Erfindung ist das erste Abtriebselement derart angeordnet, dass bei der Drehbewegung der Trägerplatte das Querelement an das erste Abtriebselement anschlägt. Das erste Abtriebselement ist vorteilhafterweise als Bolzen ausgebildet, der auf der Abtriebsplatte befestigt ist. Die Anordnung des ersten Kraftübertragungselements und des ersten Abtriebselements können erfindungsgemäß so gewählt sein, dass sie die Bewegung des beweglichen Teils der ersten Hauptgleitschiene in deren Längsrichtung jeweils auf einer Seite begrenzen. Dabei soll das erste Kraftübertragungselement bei einer Drehung einen Kreis mit einem größeren Kreisdurchmesser durchlaufen als das erste Abtriebselement. Hierdurch wird erreicht, dass die Kräfte die Drehbewegung unterstützen. Ein Wirken der Kräfte entgegen der vorgegebenen Drehrichtung, hier im Uhrzeigersinn, wäre nicht erwünscht.

Gemäß einer vorteilhaften Anordnung der Erfindung ist das erste Abtriebselement derart angeordnet, dass es gleichzeitig das erste Gegenkraftelement bildet. Die Position des ersten Abtriebselements ist hierzu bezüglich des überstehenden Bereichs des ersten Querelements geeignet gewählt. Es ist bevorzugt als Bolzen ausgebildet. Durch die geeignete Position des ersten Abtriebselements kann eine geeignete Gegenkraft zu der Antriebskraft erzeugt werden. Zur Bestimmung der Gegenkraft wird in diesem Ausführungsbeispiel eine Last an der Abtriebsplatte mitberücksichtigt.

Gemäß einem anderen vorteilhaften Ausführungsbeispiel der Erfindung ist das erste Gegenkraftelement mit einem ersten Ende über ein erstes Gegenkraft-Verbindungselement drehbar in einem vorgegebenen Abstand a zu dem ersten Antriebs-Zugelement mit dem beweglichen Teil der ersten Hauptgleitschiene und an einem zweiten Ende drehbar über ein zweites Gegenkraft-Verbindungselement mit der Abtriebsplatte verbunden. Das erste und das zweite Gegenkraft-Verbindungselement ist jeweils bevorzugt als stegartiges Element ausgebildet, wie aus einem Flachmaterial. Als Gegenkraft-Verbindungselemente können bevorzugt Bolzen verwendet werden. Das Gegenkraftelement wirkt hier als Abtrieb und bildet somit das Abtriebselement oder ein zusätzliches Abtriebselement. Es kann sowohl als einziges Abtriebselement verwendet werden, oder auch zusammen mit einem anderen Abtriebselement und/oder einem anders ausgestalteten Abtriebselement.

Bei einem bevorzugten Ausführungsbeispiel kann die erste Hauptgleitschiene oberhalb der parallel zu der ersten Hauptgleitschiene verlaufenden Mittellinie der Trägerplatte angeordnet werden, bevorzugt im oberen Drittel der Trägerplatte, das erste und das zweite Gegenkraft-Verbindungselement derart, dass das erste Gegenzugelement mit der ersten Hauptgleitschiene einen spitzen Winkel bildet. Es ist somit zwischen der ersten Hauptgleitschiene und der Mittellinie angeordnet. Das erste Gegenkraft-Verbindungselement beschreibt somit eine Kreisbahn, die nahe bei der Kreisbahn liegt, die das erste Antriebs-Zugverbindungselement beschreibt. Somit kann der Abtrieb über einen langen Hebelarm des ersten Gegenzugelements erfolgen, was zu einer besonders guten Kraftübertragung führt.

Gemäß einer vorteilhaften Weiterbildung der Erfindung ist die erste Hauptgleitschiene symmetrisch zu einer Achse durch den Mittelpunkt der Trägerplatte angeordnet. Das erste Antriebszug-Verbindungselement ist an einem ersten Ende der ersten Hauptgleitschiene und das erste Gegenkraft-Verbindungselement an dem zweiten Ende der ersten Hauptgleitschiene angeordnet, an welchem Ende wenigstens ein erstes Gegenzug-Element drehbar befestigt ist, wobei das erste Gegenzug-Element einen spitzen Winkel mit der Längsachse der ersten Hauptgleitschiene bildet. Das erste Gegenzug-Element kann gemäß einem Ausführungsbeispiel der Erfindung das Gegenkraft-Element sein, das an seinem anderen Ende mit der Abtriebsplatte verbunden ist. Gemäß einem anderen Ausführungsbeispiel der Erfindung kann es ein zweites bzw. ein weiteres bzw. anderes Gegenzug-Element sein, das gegenüber dem ersten Gegenzug-Element einen größeren Winkle zu Längsachse der ersten Hauptgleitschiene aufweist.

Gemäß einem weiteren Ausführungsbeispiel der Erfindung ist das erste Gegenzug-Element ein Masse-Element, das im Wesentlichen stabförmig ausgebildet ist, mit seinem ersten Ende über das Gegenkraft-Verbindungselement drehbar auf dem beweglichen Teil der Hauptgleitschiene gelagert ist, und an seinem zweiten Ende eine senkrecht überstehendes, entgegen der gewünschten Bewegungsrichtung der Trägerplatte angeordnetes Gewichtselement aufweist. Die Anordnung, wie Länge, Winkel zur Haupt-Gleitschien, Anordnung des Gewichtselements, werden so gewählt, dass bei Wirken der Antriebskraft aufgrund der Fliehkraft des Gewichts eine weitere Kraft auf das bewegliche Teil der Gleitschiene wirkt, die zu einer weiteren Beschleunigung der Drehbewegung der Trägerplatte führt. Das Gewichtselement ist hinsichtlich der Achse des stabförmigen MasseElements entgegen der vorgegebenen Drehrichtung angeordnet ist. Wenn das Masse-Element zusätzlich zu einem Gegenkraft-Element angeordnet ist, kann es zu der Hauptgleitschiene einen größeren Winkel aufweisen als das Gegenkraft-Element. Bei der Anordnung mehrerer Gegenkraft-Elemente können die jeweiligen Winkel zu der Haupt-Gleitschiene unterschiedlich und geeignet für die jeweilige Anordnung gewählt. Das Masse-Element kann auch über ein rechtwinkliges Verbindungselement an dem Gegenkraft-Verbindungselement der Hauptgleitschiene angeordnet sein.

Es ist vorteilhaft, wenn der stabförmige Bereich des MasseElements als Masse-Gleitschiene ausgebildet ist, wobei deren beweglicher Teil mit dem beweglichen Teil der Hauptgleitschiene verbunden ist und das Gewichtselement an dem beweglichen Teil der Masse-Gleitschiene angeordnet ist. Das feste Teil der Hauptgleitschiene kann auf der Trägerplatte befestigt sein oder beweglich angeordnet sein. Durch die Verwendung einer Gleitschiene wird die zusätzliche Kraftübertragung und Beschleunigung der Trägerplatte in Drehrichtung weiter verstärkt. Die Verbindung erfolgt auch hier bevorzugt durch einen Bolzen und ein korrespondierendes Lager, insbesondere Kugellager.

Auch ist es günstig, wenn als Gegenzug-Element ein Winkelelement mit einem ersten und einem zweiten stabförmigen Schenkel angeordnet ist, wobei der erste und der zweite Schenkel an einem Ende miteinander beweglich, in einem Winkel von etwa 90° verbunden sind, der erste Schenkel an seinem anderen Ende drehbar an dem Gegenkraft-Verbindungselement und der zweite Schenkel beweglich mit der Trägerplatte verbunden ist. Hierdurch kann eine weitere Kraftübertragung auf die Trägerplatte und eine weitere Beschleunigung derselben erreicht werden. Die Verbindung erfolgt auch hier bevorzugt durch einen Bolzen und ein korrespondierendes Lager, insbesondere Kugellager.

Gemäß einer günstigen Ausführungsform der Erfindung ist beabstandet um die Drehlagerung der Trägerplatte ein Ringelement vorgesehen ist, das Gegenzug-Element umfasst ein erstes und ein zweites Zugelement, wobei das erste Zugelement an einem Ende an dem Gegenkraft-Verbindungselement der ersten Hauptgleitschiene, das zweite Ende an dem Ringelement und das erste Ende des zweiten Zugelements gegenüberliegend an dem Ringelement befestigt ist. Es wird somit eine Anordnung erzielt, bei der das Gegenzug-Element in einem Winkel angeordnet werden kann, der zentrisch über die Trägerplatte verläuft und gleichzeitig die Zentralachse umläuft, ohne dass die Beweglichkeit des Gegenzug-Elements behindert wird. Alternativ ist es gemäß der Erfindung auch möglich, dass das Ringelement mit der Zentralachse fest verbunden ist und dass in dem ersten und in dem zweiten Zugelement jeweils ein Federelement eingesetzt ist, um die Beweglichkeit des Gegenzug-Elements zu gewährleisten.

Auch ist es günstig, wenn das Antriebs-Zugelement stabförmig ist, und an einem Ende der Hauptgleitschiene derart angeordnet ist, dass es einen spitzen Winkel mit der ersten Hauptgleitschiene bildet. So kann ein besonders effeektiver Antrieb der Trägerplatte über die Bewegung der erzielt werden.

Gemäß einem vorteilhaften Ausführungsbeispiel der Erfindung ist auf der Trägerplatte symmetrisch zu einer Ebene durch die Zentralachse, parallel zu der ersten Hauptgleitschiene, eine zweite Hauptgleitschiene, mit einem zweiten Antriebs-Zugelement, einem zweiten Gegenkraftelement und einem zweiten Kraftübertragungselement für eine Drehung der Trägerplatte in die vorgegebene Drehrichtung angeordnet. Das zweite Antriebs-Zugelement kann mit einer zusätzlichen oder mit derselben Antriebsplatte verbunden sein. Es ist vorteilhaft, dieselbe Antriebsquelle, wie nur einen Elektromotor für beide Antriebe zu verwenden. Bei dieser symmetrischen Anordnung kann der Antrieb der Trägerplatte so mit jeweils der Hälfte der Antriebskraft an je einer der Hauptgleitschienen erfolgen wie bei der Anordnung mit nur einer Hauptgleitschiene.

Gemäß einer vorteilhaften Weiterbildung dieses Ausführungsbeispiels ist beabstandet um die Drehlagerung ein Ringelementvorgesehen. Ein erstes stabförmiges Gegenzug-Element ist an einem Ende drehbar mit dem ersten Gegenkraft-Verbindungselement der ersten Hauptgleitschiene und an dem anderen Ende beweglich mit dem Ringelement verbunden ist, und ein zweites stabförmiges Gegenzug-Element an einem Ende drehbar mit einem zweiten Gegenkraft-Verbindungselement der zweiten Hauptgleitschiene und mit dem anderen Ende beweglich mit dem Ringelement verbunden ist. Wenn das Ringelement fest mit der Hauptachse verbunden ist, ist in den Gegenzug-Elementen jeweils ein Federelement zur Gewährung deren Beweglichkeit eingebracht. Auf diese Weise werden die beiden beweglichen Teile der Hauptgleitschienen so miteinander verbunden, dass deren Beweglichkeit gewährleistet bleibt und ein gemeinsames Gegenzug-Element für beide Hauptgleitschienen verwendet werden kann. Die Anordnung des einzelnen Elements im Zusammenhang mit der Hauptgleitschiene können in den einzelnen Ausführungsbeispielen entsprechend für die zweite Hauptgleitschiene vorgesehen werden.

Es ist vorteilhaft wenn das bewegliche Teil der ersten Hauptgleitschiene und der zweiten Hauptgleitschiene jeweils als Flachelement ausgebildet ist, das feste Teil der jeweiligen Hauptgleitschiene Radelemente umfasst, die drehbar auf der Trägerplatte befestigt und derart angeordnet sind, dass sie eine Führung des beweglichen Teils der jeweiligen Hauptgleitschiene in Längsrichtung gewährleisten, wobei die Radelemente und die Längsseiten des Flachelements mit zueinander korrespondierenden Führungselementen ausgebildet sind. Wesentlich ist, dass das bewegliche Teil der jeweiligen Hauptgleitschiene einerseits gut geführt ist und andererseits aufgrund der starken an den Hauptgleitschienen wirkenden Kräften das bewegliche Teil nicht mit dem festen Teil verkantet und festklemmt. Dies wird erfindungsgemäß dadurch erreicht, dass die Radelemente als Führungselemente Kugellager und Zahnkränze aufweisen und Führungselemente der Flachelemente mit korrespondierenden Abrollflächen und Zähnen versehen sind. Es können beispielsweise bei den Radelementen übereinander angeordnete Kugellager und Zahnräder verwendet werden, wobei die Führungselemente des Flachelements korrespondierende Zähen und Abrollflächen aufweisen.

Für alle erwähnten Drehverbindungen ist es vorteilhaft, Bolzen und Kugellager zu verwenden, wie dies bei einigen Drehverbindungen erwähnt ist. Die Bolzen und/oder der Einsatz der Kugellager können gummiert ausgeführt sein, da so die Beweglichkeit der einzelnen Bauteile zueinander verbessert wird. Dies führt zu einer verbesserten Kraftübertragung, da Verluste verringert werden. Auch werden hierdurch klappernde Geräusche im Betrieb der Vorrichtung vermieden.

Aus der PCT/EP2015077680 ist ein Getriebe, insbesondere ein Planetenradgetriebe bekannt, bei welchem das Planetenrad mit einem exzentrisch gelagerten Antrieb bewegt wird, der eine eigene, an einem separaten Träger befestigte Lagerachse aufweist. Somit hat der Antrieb weder eine feste Verbindung zur Lagerachse noch zum Planetenrad. Die Richtung der Antriebskraft ist hier schräg zu einer fest mit dem Planetenrad verbunden Hohlachse gewählt, und wird mittels einer entsprechend angeordneten Zugvorrichtung realisiert. Auch für einen Abtrieb oder Antriebe eines solchen Getriebes ist die erfindungsgemäße Kraftübertragungsvorrichtung vorteilhaft einsetzbar.

Weitere Einzelheiten, Merkmale und Vorteile der vorliegenden Erfindung ergeben sich aus der nachfolgenden Beschreibung bevorzugter Ausführungsbeispiele unter Bezugnahme auf die Zeichnung.

Es zeigen:
- Fig. 1: Eine schematische Darstellung eines Ausführungsbeispiels der erfindungsgemäßen Vorrichtung zur Kraftübertragung in Draufsicht;
- Fig. 2: eine schematische Darstellung eines weiteren Ausführungsbeispiels der erfindungsgemäßen Vorrichtung zur Kraftübertragung in Draufsicht;
- Fig. 3: eine schematische Darstellung eines weiteren Ausführungsbeispiels der erfindungsgemäßen Vorrichtung zur Kraftübertragung;
- Fig. 4: eine schematische Darstellung eines weiteren Ausführungsbeispiels der erfindungsgemäßen Vorrichtung zur Kraftübertragung;
- Fig. 5: eine schematische Darstellung eines weiteren Ausführungsbeispiels der erfindungsgemäßen Vorrichtung zur Kraftübertragung;
- Fig. 6: eine schematische Darstellung eines Ausführungsbeispiels einer Hauptgleitschiene in Draufsicht auf eine erste Schnittebene; und
- Fig. 7: Fig. 6 eine schematische Darstellung eines Ausführungsbeispiels einer Hauptgleitschiene in Draufsicht auf eine zweite Schnittebene.

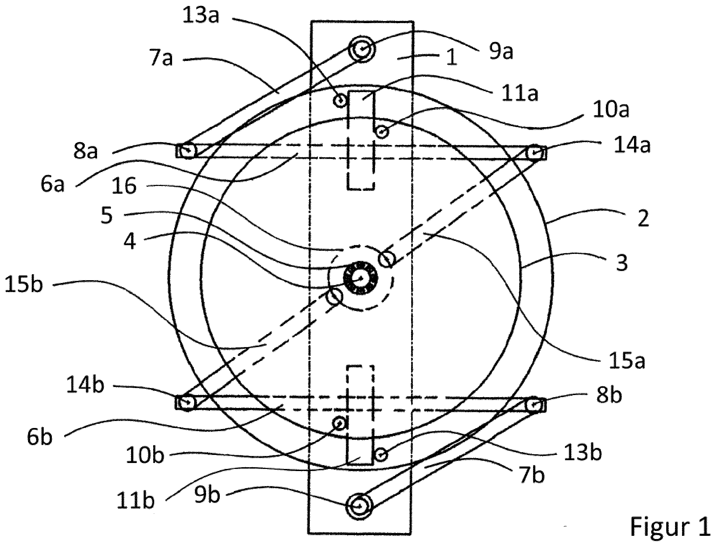

In Figur 1 ist eine Vorrichtung zur Kraftübertragung gemäß der Erfindung gezeigt, die eine Antriebsplatte 1, eine Trägerplatte 2 und eine Abtriebsplatte 3 aufweist, die jeweils im Bereich um ihren Mittelpunkt eine Drehlagerung aufweisen, mit welcher sie drehbar um eine Zentralachse 4 gelagert sind. In dem gezeigten Ausführungsbeispiel ist die Antriebsplatte 1 unten, die Trägerplatte 2 in der Mitte und die Abtriebsplatte oben angeordnet. Diese Reihenfolge kann je nach Bedarf auch anders gewählt werden. Die Drehlagerung ist im gezeigten Ausführungsbeispiel jeweils als Kugellager ausgebildet, wobei die Drehlagerung 5 der oberen Platte, hier der Abtriebsplatte 3 sichtbar ist. Auf der Trägerplatte 2 ist sind eine erste und eine zweite Hauptgleitschiene 6a, 6b beabstandet und symmetrisch zur Zentralachse 4 angeordnet. Die erste und die zweite Hauptgleitschiende, welche jeweils ein festes Teil aufweist, das fest mit der Trägerplatte 2 verbunden ist und ein bewegliches Teil, das gegenüber dem festen Teil in Richtung der Längsachse der jeweiligen Hauptgleitschiene bewegbar ist.

Ein erstes Antriebs-Zugelement 7a ist an einem ersten Ende über ein erstes Antriebszug-Verbindungselement 8a drehbar mit dem beweglichen Teil der ersten Hauptgleitschiene 6a und über ein zweites Antriebszug-Verbindungselement 9a drehbar mit der Antriebsplatte 1 verbunden. Für das erste und zweite Antriebszug-Verbindungselement 8a, 9a sowie für alle weiteren Verbindungselemente für eine drehbare Verbindung in der erfindungsgemäßen Vorrichtung können Bolzen, bevorzugt gummierte Bolzen mit Kugellagern oder eine anderen geeigneten Lagerung verwendet werden. Beim Antrieb der Antriebsplatte 1 mittels einer externen Quelle, beispielsweise eines Elektromotors, wirkt eine Antriebskraft auf des bewegliche Teil der ersten Hauptgleitschiene, deren Richtung durch die Richtung des Antriebs-Zugelements und durch die Drehrichtung der Antriebsplatte 1 gegeben ist, die hier im Uhrzeigersinn erfolgt.

Auf der Abtriebsplatte 1 ist ein Abtriebselement 10a angeordnet, welches hier als Bolzen, vorzugsweise gummiert, ausgebildet ist. Im mittleren Bereich der ersten Hauptgleitschiene 6a ist ein Querelement 11a mit dem beweglichen Teil der ersten Hauptgleitschiene 6a derart verbunden, dass es quer zur Längsachse der ersten Hauptgleitschiene 6a über die erste Hauptgleitschiene 6a übersteht. Das Querelement 11a und das Abtriebselement 10a sind derart ausgebildet und angeordnet, dass das Querelement 11a bei einer Drehbewegung der Trägerplatte 2 an das Abtriebselement 10a anschlägt und so Kraft auf die Abtriebsplatte 3 überträgt und diese entsprechend in Drehbewegung versetzt wird. Es erfolgt hier also eine Abtriebs-Kraftübertragung durch eine Abtriebskraft-Übertragungsverbindung von dem beweglichen Teil der ersten Hauptgleitschiene 6a auf das Abtriebselement 10a und auf die Abtriebsplatte 3. Das Abtriebselement 10a wirkt hier gleichzeitig als Gegenkraftelement zu dem Antriebs-Zugelement 7a. Das Abtriebselement 10a ist derart angeordnet, dass bei einer vorgegebenen auf das Antriebs-Zugelement 7a wirkende Antriebskraft über das Gegenkraftelement eine Gegenkraft auf das bewegliche Teil der Hauptgleitschiene 6a erzeugt wird, derart dass die aus der Antriebskraft und der Gegenkraft auf die Hauptgleitschiene 6a wirkende Gesamtkraft sowohl eine parallele als auch eine vertikale Komponente zu der Längsachse der mit der Hauptgleitschiene 6a verbundenen Trägerplatte 2 in eine vorgegebene Drehrichtung aufweist.

Auf der Trägerplatte 2 ist ein Kraftübertragungselement 13a angeordnet, derart dass es bei der Drehbewegung der Trägerplatte 2 eine Drehkraft-Übertragungsverbindung auf das bewegliche Teil der Hauptgleitschiene 6a bewirkt. Das erste Kraftübertragungselement 13a ist vorteilhafterweise als Bolzen ausgebildet, der vorzugsweise gummiert ist. Wenn die Antriebskraft an die Antriebsplatte 1 in Drehbewegung im Uhrzeigersinn versetzt, wirkt an der Hauptgleitschiene 6a eine Gesamtkraft, deren Komponente senkrecht zu der Längsachse der ersten Hauptgleitschiene 6a die erste Hauptgleitschiene 6a in eine Drehbewegung im Uhrzeigersinn um ihren Mittelpunkt bewirken möchte. Da die Gleitschiene mit der Trägerplatte 2 über ihr festes Teil fest verbunden ist, führt dies zu einer Drehbewegung der Trägerplatte 2. Die Hauptgleitschiene 6a führt ebenfalls eine Drehbewegung mit der Trägerplatte 2 aus, bei welcher sich die Hauptgleitschiene 6a entlang einer zu der Zentralachse 4 beabstandeten Kreisbahn mit deren Mittelpunkt bewegt. Die Komponente der Gesamtkraft, die parallel zu der Längsachse der ersten Hauptgleitschiene 6a wirkt, führt zu einer kleinen Bewegung des beweglichen Teils der ersten Hauptgleitschiene 6a in Bezug auf das bewegliche Teil der ersten Hauptgleitschiene 6a. Dies führt zu einer schnelleren Drehbewegung der Trägerplatte 2. Hierdurch schlägt das erste Kraftübertragungselement 13a an das erste Querelement 11a an, das an dem beweglichen Teil der ersten Hauptgleitschiene 6a befestigt ist. Dadurch erfolgt eine dauerhafte Kraftübertragung auf die Trägerplatte 2 während der Drehbewegung. Aufgrund der erfindungsgemäßen Anordnung mit der ersten Hauptgleitschiene 6 wird somit die Drehbewegung der Trägerplatte unterstützt und damit die Kraftübertragung der Vorrichtung verbessert.

Die erste Hauptgleitschiene 6a ist symmetrisch zu einer horizontalen Achse durch den Mittelpunkt der Trägerplatte 2 angeordnet. Sie befindet sich im oberen Drittel der Trägerplatte 2 bzw. in deren Randbereich. Punktsymmetrisch zum Mittelpunkt der Trägerplatte 2 ist eine zweite Hauptgleitschiene 6b angeordnet, ein zweites Antriebs-Zugelement 7b, ein zweites Abtriebselement 10b, welches als Gegenkraftelement wirkt, ein zweites Querelement 11b, sowie eine zweites Kraftübertragungselement 13b. Die Anordnung, Auswahl und Beschaffenheit dieser einzelnen Elemente entspricht denen der oben im Zusammenhang mit der ersten Hauptgleitschien 6a beschriebenen Anordnung und wird daher nicht nochmals ausgeführt. Der Antrieb kann bei der Verwendung der ersten und der zweiten Gleitschiene mit jeweils der Hälfte der Antriebskraft über die Antriebsplatte 3 erfolgen wie bei der Anordnung mit nur der ersten Hauptgleitschien 6a.

Das erste Antriebszug-Verbindungselement 8a ist an einem ersten Ende der ersten Hauptgleitschiene 6a angeordnet und mit dem beweglichen Teil der Hauptgleitschiene 6a verbunden. An dem zweiten Ende der ersten Haupt-Gleitschiene 6a ist ein erstes Gegenzug-Verbindungselement 14a angeordnet und mit dem beweglichen Teil der Hauptgleitschiene 6a verbunden. An dem Gegenzug-Verbindungselement ist ein erstes stabförmiges Gegenzugelement 15a drehbar befestigt. Das erstes stabförmiges Gegenzug-Element 15a bildet einen spitzen Winkel mit der Längsachse der Hauptgleitschiene 6a. Die Befestigung kann über einen Bolzen und ein Kugellager erfolgen. Das andere Ende des ersten Gegenzug-Elements 15a ist mit einem Ringelement 16 beweglich verbunden, welches beabstandet zu der Drehlagerung der Trägerplatte 2 angeordnet ist. Ein zweites stabförmiges Gegenzugelement 15b ist an einem Ende drehbar mit einem zweiten Gegenzug-Verbindungselement 14b der zweiten Hauptgleitschiene 6b und mit dem anderen Ende beweglich mit dem Ringelement 16 verbunden. Das erste und das zweite stabförmige Gegenzugelement bewirken aufgrund Ihrer Einwirkung auf das bewegliche Teil der jeweiligen Hauptgleitschiene 6a, 6b eine weitere Unterstützung der Drehbewegung der Trägerplatte 2, so dass die Kraftübertragung der Vorrichtung weiter verbessert wird.

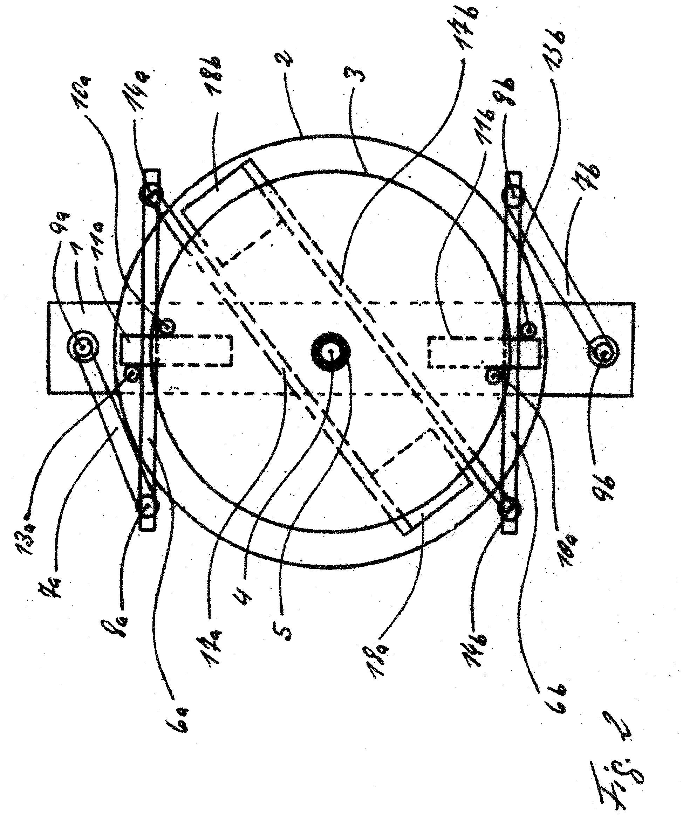

In Figur 2 ist ein zweites Ausführungsbeispiel der erfindungsgemäßen Vorrichtung zur Kraftübertragung dargestellt. Der Aufbau der Vorrichtung entspricht im Wesentlichen dem Aufbau der Vorrichtung aus Figur 1. Gleiche Vorrichtungsmerkmale sind mit gleichen Bezugszeichen bezeichnet wie bei dem Ausführungsbeispiel der Figur 1. An dem ersten Gegenzug-Verbindungselement 14a der ersten Hauptgleitschien 6a ist erstes Masseelement 17 drehbar befestigt, an dem zweiten Gegenzug-Verbindungselement 14b der zweiten Hauptgleitschien 6b ist ein zweites Masseelement 17b drehbar befestigt. Das erste und das zweite Masseelement 17a, 17b sind jeweils im Wesentlichen stabförmig ausgebildet und weisen an dem zweiten Ende jeweils ein senkrecht überstehendes, entgegen der Bewegungsrichtung der Trägerplatte 2 angeordnetes erstes bzw. zweites Gewichtselement 18a, 18b auf. Aufgrund des ersten und des zweiten Masseelements 17a, 17b entsteht eine Zentrifugalkraft, die auf den jeweils beweglichen Teil der ersten und der zweiten Hauptgleitschiene 6a, 6b wirkt. Hierdurch wird eine Unterstützung der Drehbewegung der Trägerplatte 2 und eine Verbesserung der Kraftübertragung der Vorrichtung bewirkt. Die Unterstützung der Drehbewegung und die Kraftübertragung können durch die speziell gewählte Anordnung der Masseelemente 17a, 17b beeinflusst werden. Letztere können auch beidseitig über den stabförmigen Bereich des ersten und des zweiten Masseelements 17a, 17b überstehen. Der stabförmige Bereich des ersten und es zweiten Masseelements 17a, 17b kann als Masse-Gleitschiene ausgebildet sein. Dabei ist der bewegliche Teil der ersten Masse-Gleitschiene mit dem beweglichen Teil der ersten Hauptgleitschiene 6a verbunden und der bewegliche Teil der zweiten Masse-Gleitschiene mit dem beweglichen Teil der zweiten Hauptgleitschiene 6b.

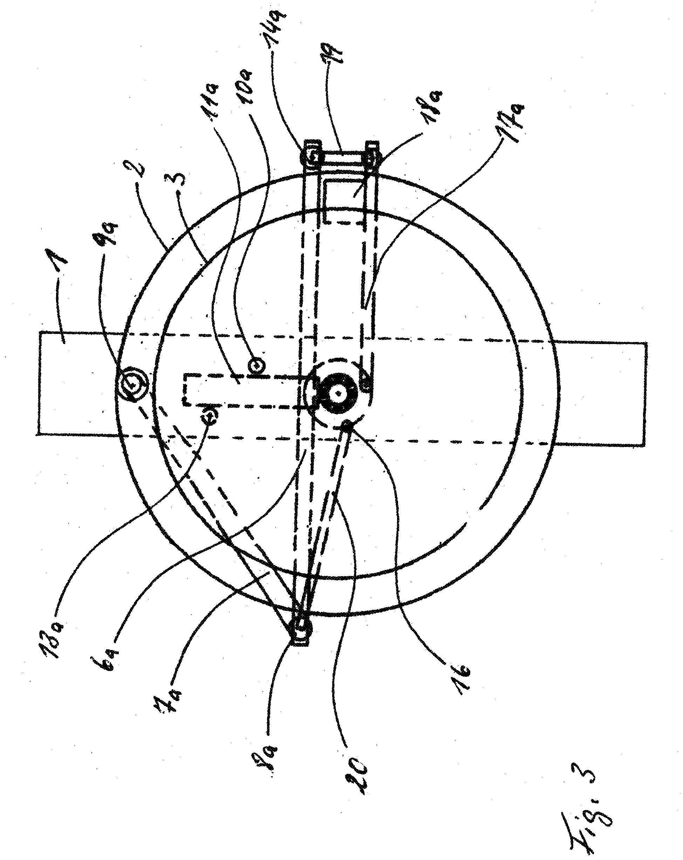

In Figur 3 ist ein Ausführungsbeispiel der erfindungsgemäßen Vorrichtung zur Kraftübertragung gezeigt, bei dem die erste Hauptgleitschiene 6a nahe an dem Mittelpunkt bzw. nahe an dem Drehlagerung der Trägerplatte angeordnet ist. Das erste Antriebs-Zugelement 7a, das erste Querelement 11a, das erste Abtriebselement 10a, das erste Kraftübertragungselement 13a sind entsprechen geeignet zu der Anordnung der ersten Hauptgleitschiene 6a angeordnet. Das erste Masseelement 17a ist als Masse-Gleitschiene ausgebildet und parallel zu der ersten Hauptgleitschiene 6a auf der anderen Seite zu einer parallelen Ebene durch den Mittelpunkt der Trägerplatte 12 angeordnet. Das erste Gewichtselement 18a ist im Randbereich der Trägerplatte 2 an dem beweglichen Teil der Masse-Gleitschiene befestigt, derart, dass es in Richtung der ersten Hauptgleitschiene 6a, also entgegen der Drehrichtung, weist. Das erste Masseelement 17a ist mit einem Ende über ein Abstandsstück 19 mit dem beweglichen Teil der ersten Hauptgleitschiene 6a verbunden. Die Verbindung des Abstandsstücks 19 ist an beiden Seiten drehbar. An dem anderen Ende ist das Masseelement 17 mit dem die Zentralachse 4 beabstandet umgebende, freien Ringelement 16 beweglich verbunden. Auf der anderen Seite des Ringelements 16 ist ein Stegelement 20 angeordnet, das auf einer Seite mit dem Ringelement 16 und auf der anderen Seite mit dem ersten Antriebszug-Verbindungselement 8a jeweils drehbar verbunden ist. Aufgrund der dezentralen Anordnung des Gewichtselements 18 entsteht bei der Drehbewegung ein seitlicher Druck auf die erste Hauptgleitschiene 6a, welcher zu einer zweiten schräg verlaufenden Antriebskraft an der ersten Hauptgleitschiene 6a führt. Mittels des Stegelements 20 wird eine Zugkraft auf die erste Hauptgleitschiene 6a übertragen, welche wiederum von der ersten Hauptgleitschiene 6a auf das erste Abtriebselement 10a übertragen wird. Wegen des kleinen Winkels zwischen der ersten Hauptgleitschiene 6a und dem Stegelement 20 entsteht hier nur eine unwesentliche Gegenkraft in Richtung der Zentralachse 4.

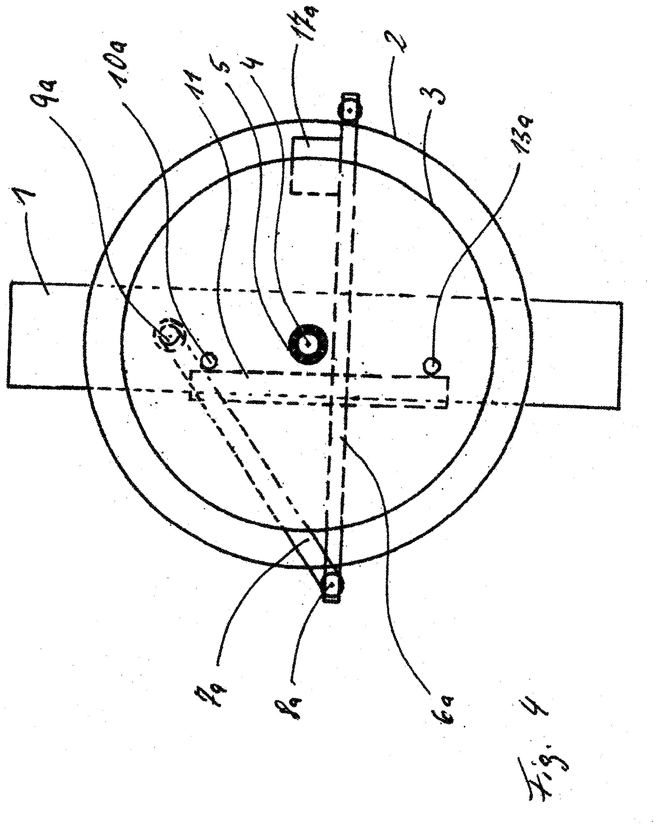

In Figur 4 ist ein Ausführungsbeispiel der Erfindung gezeigt, bei dem die erste Hauptgleitschiene 6a auf der Trägerplatte 2 in der horizontalen Ebene der Trägerplatte 2 unterhalb der Zentralachse 4 und der Drehlagerung der Trägerplatte angeordnet ist. Die Drehlagerung der Trägerplatte befindet sich auf der Zentralachse 4 unterhalb der in der Figur 4 sichtbaren Drehlagerung 5 der Abtriebsplatte 3. Diese Anordnung ist vorteilhaft, wenn der Antrieb beispielsweise mittels eines Planetenradgetriebes mit einer großen Hohlachse, wie es in der PCT/EP2015077680 beschrieben ist, erfolgen soll, da somit ausreichend Platz zur Anordnung der Hohlachse im oberen Bereich der Trägerplatte zur Verfügung steht. In dieser Anordnung ist das Masseelement 17 sozusagen in die erste Hauptgleitschiene 6a integriert bzw. mit dieser identisch. Das Gewichtselement 17 ist auf dem beweglichen Teil der ersten Hauptgleitschiene 6a angeordnet, wobei die Lage des Gewichtselements 18a auf der Trägerplatte 2 entsprechend der Lage des Masseelements 18a aus Figur 3 gewählt ist. Durch das Gewichtselement 18a wird ein seitlicher Druck auf die erste Hauptgleitschiene 6a ausgeübt, an der Stelle, an der sich in den vorherigen Ausführungsbeispielen des ersten Gegenzug-Verbindungselements 14a befindet. Analog dem Ausführungsbeispiel der Figur 3 erfolgt aufgrund des Gewichtselements 18 eine Kraftübertragung auf das bewegliche Teil der Hauptgleitschiene 6a in deren Längsrichtung, die über das Querelement 11 auf das Abtriebselement 10a und somit auf die Abtriebsplatte 3 übertragen wird. Es wird somit auch durch diese Anordnung die Drehbewegung der Trägerplatte 2 unterstützt und eine bessere Kraftübertragung der Vorrichtung erreicht.

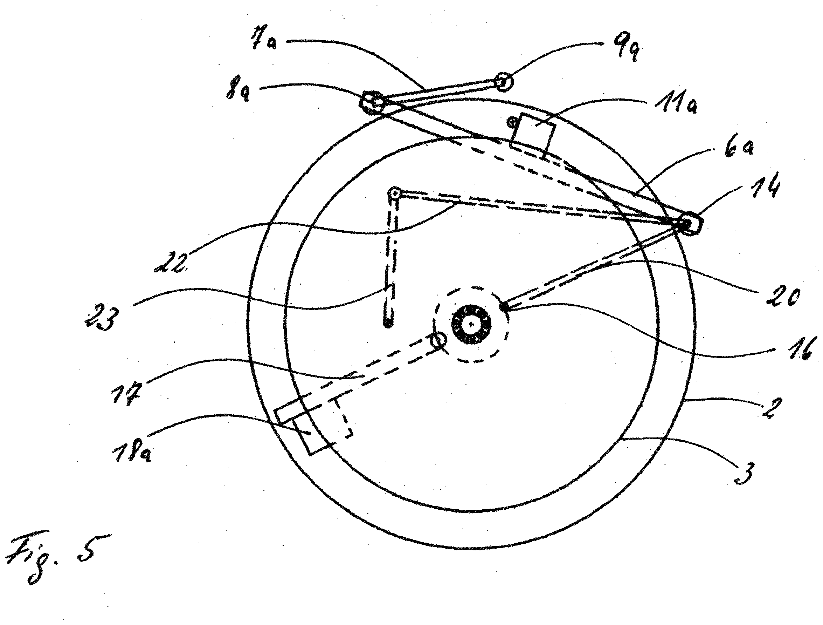

Figur 5 zeigt ein Ausführungsbeispiel der Erfindung, bei dem die erste Hauptgleitschiene 6a im Randbereich der Trägerplatte 2 angeordnet ist. Wie in den anderen Ausführungsbeispielen der Erfindung ist das erste Antriebs-Zugelement 7a mittels des ersten Antriebszug-Verbindungselement 8a an dem beweglichen Teil der ersten Hauptgleitschiene 6a drehbar befestigt. An dem zweiten Antriebszug-Verbindungselement 9a ist das Stegelement 20 mit einem Ende drehbar angeordnet. Das andere Ende des Stegelements 20 ist drehbar mit dem Ringelement 16 verbunden, das die Zentralachse 4 und die Drehlagerung der Trägerplatte 2 beabstandet umgibt. Auf der gegenüberliegenden Seite des Ringelements 16 ist das Masseelement 17 drehbar befestigt. An dem anderen Ende des Masseelements 17 ist das Gewichtselement 18 dezentral angeordnet, hier entgegen der Drehrichtung der Trägerplatte 2. Das Stegelement 20 und das Ringelement 16 bilden eine Verlängerung des Masseelements 17, durch welche eine zentrale Ausrichtung des Masseelements 17 ermöglicht wird, ohne dass die Zentralachse 4 die Beweglichkeit des Masseelements 17 beeinträchtigt.

An dem zweiten Antriebszug-Verbindungselement 9 ist zusätzlich ein Winkelelement 21 mit einem ersten und einem zweiten Schenkel 22, 23 angeordnet. Der erste Schenkel 22 und der zweite Schenkel 23 sind an einem Ende miteinander beweglich verbunden, wobei der Winkel etwa 90° beträgt. Der erste Schenkel 22 ist an seinem anderen Ende drehbar an dem Gegenzug-Verbindungselement 14. Der zweite Schenkel 22 kann beweglich mit der Trägerplatte 2 verbunden sein. Der Winkel des Winkelelements 21 ist gegenüber über der Längsachse der ersten Hauptgleitschiene 6a so gewählt, dass das Winkelelement 21 in der oberen Hälfte der Trägerplatte 2 angeordnet ist, auf welcher sich auch die erste Hauptgleitschiene befindet. Mittels des Winkelelements 21 wird eine zusätzliche Antriebskraft auf die erste Hauptgleitschien 6a übertragen, durch welche wiederum die Kraftübertragung der Vorrichtung verbessert wird. Es kann bei dieser Anordnung der Abtrieb über einen Abtriebsbolzen an der Verbindung des ersten und des zweiten Schenkels 22, 23 des Winkelelements erfolgen.

Im Rahmen der Erfindung sind weitere Kombinationen möglich. Verschieden Arten von Gegenzugelemente können miteinander kombiniert werden. Wesentlich ist dabei, dass sie mit unterschiedlichen Winkeln zu der zugehörigen ersten oder zweiten Hauptgleitschiene 6a, 6b angeordnet werden. Es ist auch möglich, dass ein Teil der Anordnung auf der Rückseite der Trägerplatte 2 vorgesehen wird. Die Lage, Auswahl und Kombination der einzelnen Bauteile kann nach den bautechnischen Erfordernissen, den Anforderungen an die Kraftübertragungsverhältnisse jeweils geeignet gewählt werden.

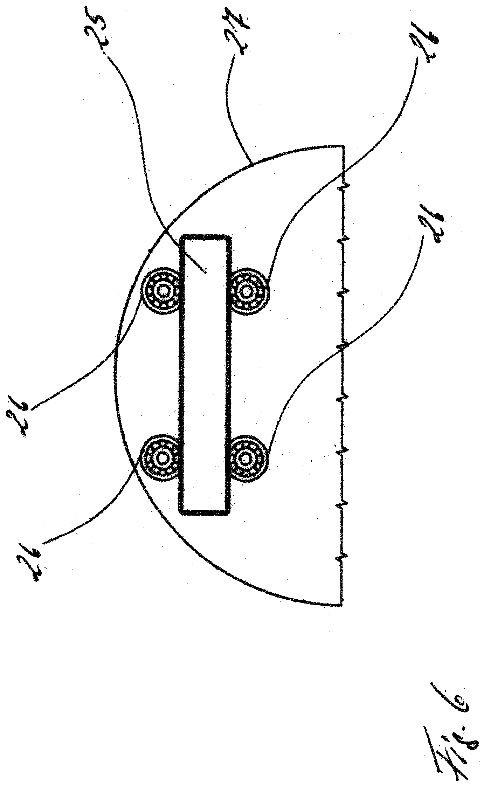

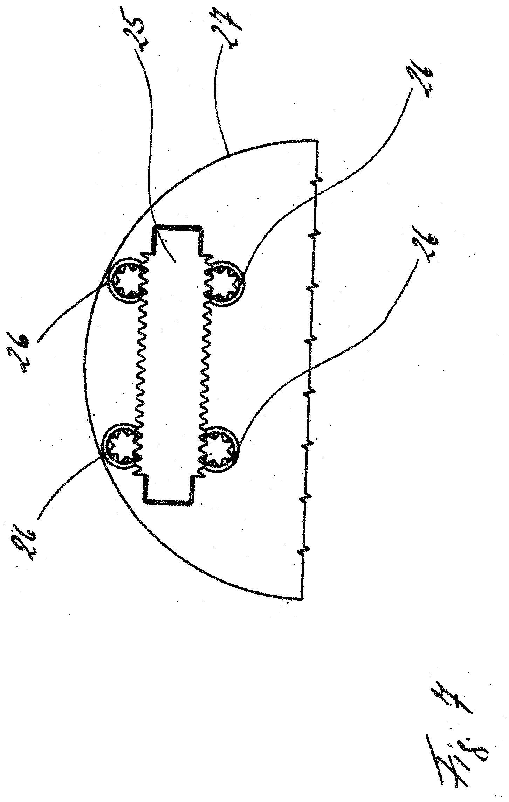

In Figur 6 und 7 ist eine erfindungsgemäßes Ausführungsbeispiel für eine Gleitschiene, wie sie gemäß der Erfindung für die erste und zweite Hauptgleitschienen 6a, 6b oder auch für eine Massegleitschiene verwendet wird, in zwei unterschiedlichen Ebenen parallel zur der Oberfläche einer Platte 27, die der Trägerplatte 2 entsprechen kann, gezeigt. Die gezeigte Gleitschiene umfasst ein erstes Teil 25 einer Gleitschiene, das aus einem Flachmaterial oder ähnlichem gebildet ist und ein zweites Teil 26, das aus einzelnen Radelementen gebildet ist. Jedes der Radelemente umfasst ein Kugellager und einen Zahnkranz. Das zweite Teil 26 der Gleitschiene ist fest mit der gezeigten Platte 27 verbunden. Hierzu können die einzelnen Radelemente auf die Platte 27 aufgeschraubt sein. Das erste Teil 25 der Gleitschiene ist gegenüber dem festen Teil 25 beweglich. In Figur 6 ist eine Schnittebene gezeigt, in der die Kugellager der Radelemente des zweiten Teils 25 der Gleitschiene gezeigt sind. Diese laufen bei einer Bewegung des ersten Teils 25 der Gleitschiene gegenüber dem zweiten Teil 26 der Gleitschiene mit Ihrer Abrollfläche entlang einer korrespondierenden Abrollfläche des ersten Teils 25 der Gleitschiene, welche auf dessen Längsseiten ausgebildet ist. In Figur 7 ist eine andere Ebene dargestellt, in der Zahnkränze gezeigt sind, die in einer Ebene oberhalb der Kugellager angeordnet sind. Auf den Längsseiten des ersten Teils 25 der Gleitschiene sind korrespondierend zu den Zahnkränzen Zähne ausgebildet, auf welchen die Zahnkränze bei einer Bewegung des ersten Teils 25 der Gleitschiene gegenüber dem zweiten Teil der Gleitschiene 26 entlanglaufen. Es können hier auch mehrere Kugellager oder Zahnkränze und in unterschiedlicher Anordnung bei den Radelementen des ersten Teils der Gleitschiene vorgesehen sein. Entsprechend sind dann die Längsseiten des zweiten Teils 26 der Gleitschiene mit korrespondierenden Abrollflächen oder Zähnen ausgebildet. Wenn gemäß der Erfindung eine Gleitschiene, wie die Massegleitschiene, nicht fest mit der Trägerplatte 2 verbunden sein soll, werden die Radelemente auf einer separaten geeigneten Platte befestigt, welche dann gegenüber der Trägerplatte 2 beweglich ist.

### Bezugszeichenliste

- 1: Antriebsplatte
- 2: Trägerplatte
- 3: Abtriebsplatte
- 4: Zentralachse
- 5: Drehlagerung der Abtriebsplatte
- 6: Hauptgleitschiene
- 7: Antriebs-Zugelement
- 8: erstes Antriebszug-Verbindungselement
- 9: zweites Antriebszug-Verbindungselement
- 10: Abtriebselement
- 11: Querelement
- 12: Gegenkraftelement
- 13: Kraftübertragungselement
- 14: Gegenzug-Verbindungselement
- 15: Gegenzugelement
- 16:
- 17: Ringelement
- 18: Masseelement
- 19: Gewichtselement
- 20: Abstandsstück
- 21: Stegelement
- 22: Winkelelement
- 23: Erster Schenkel
- 24: Zweiter Schenkel
- 25: Erstes Teil der Gleitschiene
- 26: Zweites Teil der Gleitschiene
- 27: Platte

## Patentansprüche

1. Vorrichtung zur Kraftübertragung
- mit einer Antriebsplatte (1), einer Trägerplatte (2) und einer Abtriebsplatte (3), die jeweils in einem Bereich um ihren Mittelpunkt eine Drehlagerung (5) aufweisen, mit welcher sie jeweils drehbar auf einer Zentralachse (4) übereinander angeordnet sind,
- wobei auf der Trägerplatte (2) eine erste Hauptgleitschiene (6a) beabstandet zu der Drehlagerung der Trägerplatte (2) angeordnet ist, die ein festes Teil aufweist, das fest mit der Trägerplatte (2) verbunden ist und ein bewegliches Teil, das gegenüber dem festen Teil in Richtung der Längsachse der ersten Hauptgleitschiene (6a) bewegbar ist,
- mit einem ersten Antriebs-Zugelement (7a),
**dadurch gekennzeichnet,**
**dass** das erste Antriebs-Zugelement (7a) an einem ersten Ende über ein erstes Antriebszug-Verbindungselement (8a) drehbar mit dem beweglichen Teil der ersten Hauptgleitschiene (6a) und an einem zweiten Ende über ein zweites Antriebszug-Verbindungselement (9a) drehbar mit der Antriebsplatte (1) verbunden ist,
wobei die Vorrichtung weiter aufweist
- ein erstes Gegenkraftelement, welches derart angeordnet ist, dass bei einer vorgegebenen auf das erste Antriebs-Zugelement (7a) wirkenden Antriebskraft über das erste Gegenkraftelement eine Gegenkraft auf das bewegliche Teil der ersten Hauptgleitschiene (6a) erzeugt wird, derart dass die aus der Antriebskraft und der Gegenkraft auf die erste Hauptgleitschiene (6a) wirkende Gesamtkraft sowohl eine parallele als auch eine vertikale Komponente zu der Längsachse der ersten Hauptgleitschiene (6a) aufweist, und zu einer Drehbewegung der mit der ersten Hauptgleitschiene (6a) verbunden Trägerplatte (2) in eine vorgegebene Drehrichtung führt,
- ein erstes Kraftübertragungselement (13a), das derart auf der Trägerplatte (2) angeordnet ist, dass es bei der Drehbewegung der Trägerplatte (2) eine Drehkraft-Übertragungsverbindung auf das bewegliche Teil der ersten Hauptgleitschiene (6a) bewirkt, und
- ein erstes Abtriebselement (10a), das an einem ersten Ende mit der Abtriebsplatte (3) verbunden und derart angeordnet ist, dass bei die Drehbewegung der Trägerplatte (2) eine Abtriebskraft-Übertragungsverbindung von dem beweglichen Teil der ersten Hauptgleitschiene (6a) auf das erste Abtriebselement (10a) besteht.

2. Vorrichtung zur Kraftübertragung nach Anspruch 1, **dadurch gekennzeichnet, dass** die erste Hauptgleitschiene (6a) symmetrisch zu einer horizontalen Achse durch den Mittelpunkt der Trägerplatte (2) angeordnet ist,
dass in einem mittleren Bereich des beweglichen Teils der ersten Hauptgleitschiene (6a) ein erstes Querelement (11a) vorgesehen ist, das quer zur Längsachse der ersten Hauptgleitschiene (6a) über die erste Hauptgleitschiene (6a) übersteht, derart dass das Kraftübertragungselement (13) bei der Drehbewegung der Trägerscheibe (2) an das Querelement (11a) anschlägt.

3. Vorrichtung zur Kraftübertragung nach Anspruch 2, **dadurch gekennzeichnet, dass** das erste Abtriebselement (10a) derart angeordnet ist, dass bei der Drehbewegung der Trägerplatte (2) das erste Querelement (11a) an das erste Abtriebselement (10a) anschlägt.

4. Vorrichtung zur Kraftübertragung nach Anspruch 3, **dadurch gekennzeichnet, dass** das erste Abtriebselement (10a) derart angeordnet ist, dass es gleichzeitig das erste Gegenkraftelement bildet.

5. Vorrichtung zur Kraftübertragung nach Anspruch 1 oder 2, **dadurch gekennzeichnet, dass** das erste Gegenkraftelement mit einem ersten Ende über ein erstes Gegenkraft-Verbindungselement drehbar in einem vorgegebenen Abstand zu dem ersten Antriebs-Zugelement (7a) mit dem beweglichen Teil der ersten Hauptgleitschiene (6a) und an einem zweiten Ende drehbar über ein zweites Gegenkraft-Verbindungselement mit der Abtriebsplatte (3) verbunden ist.

6. Vorrichtung zur Kraftübertragung nach einem der vorangehenden Ansprüche, **dadurch gekennzeichnet,**
**dass** die Hauptgleitschiene symmetrisch zu einer Achse durch den Mittelpunkt der Trägerplatte (2) angeordnet ist,
das erste Antriebszug-Verbindungselement (8a) an einem ersten Ende der ersten Hauptgleitschiene (6a) angeordnet ist, und ein erstes Gegenzug-Verbindungselement (14a) an dem zweiten Ende der Gleitschiene (6a) angeordnet ist, an welchem wenigstens ein erstes Gegenzug-Element (15a, 15b) drehbar befestigt ist, wobei das Gegenzug-Element (15a, 15b) einen spitzen Winkel mit der Längsachse der ersten Hauptgleitschiene (6a) bildet.

7. Vorrichtung zur Kraftübertragung nach Anspruch 6, **dadurch gekennzeichnet, dass** das Gegenzug-Element ein Masse-Element (17a, 17b)ist, das im Wesentlichen stabförmig ausgebildet ist, mit seinem ersten Ende über das Gegenzug-Verbindungselement drehbar auf dem beweglichen Teil der Hauptgleitschiene (6a) gelagert ist, und an seinem zweiten Ende eine senkrecht überstehendes, entgegen der gewünschten Bewegungsrichtung der Trägerplatte (2) angeordnetes erstes Gewichtselement (18a) aufweist.

8. Vorrichtung zur Kraftübertragung nach Anspruch 7, **dadurch gekennzeichnet, dass** der stabförmige Bereich des ersten MasseElements (17a) als Masse-Gleitschiene ausgebildet ist, wobei deren beweglicher Teil mit dem beweglichen Teil der Hauptgleitschiene (6a) verbunden ist und das erste Gewichtselement (18a) an dem beweglichen Teil der Masse-Gleitschiene angeordnet ist.

9. Vorrichtung zur Kraftübertragung nach Anspruch 7, **dadurch gekennzeichnet, dass** als Gegenzug-Element ein Winkelelement (21) mit einem ersten und einem zweiten stabförmigen Schenkel (22, 23) angeordnet ist,
wobei der erste und der zweite Schenkel (22,23) an einem Ende miteinander beweglich, in einem Winkel von etwa 90° verbunden sind, der erste Schenkel (22) an seinem anderen Ende drehbar an dem ersten Gegenzug-Verbindungselement (14a) und der zweite Schenkel (23) beweglich mit der Trägerscheibe (2) verbunden ist.

10. Vorrichtung zur Kraftübertragung nach einem der Ansprüche 6 bis 9, **dadurch gekennzeichnet,**
**dass** beabstandet um die Drehlagerung der Trägerplatte (2) ein Ringelement (16) vorgesehen ist, das Gegenzug-Element (15) ein erstes und ein zweites Zugelement umfasst, wobei das erste Zugelement an einem Ende an dem Gegenzug-Verbindungselement (14a) der ersten Hauptgleitschiene (6a), das zweite Ende an dem Ringelement (16) und das erste Ende des zweiten Zugelements gegenüberliegend an dem Ringelement (16) befestigt ist.

11. Vorrichtung zur Kraftübertragung nach einem der vorangehenden Ansprüche, **dadurch gekennzeichnet, dass** das Antriebs-Zugelement (7) stabförmig ist, an einem Ende der ersten Hauptgleitschiene (6a) derart angeordnet ist, dass es einen spitzen Winkel mit der ersten Hauptgleitschiene (6a) bildet.

12. Vorrichtung zur Kraftübertragung nach einem der vorangehenden Ansprüche, **dadurch gekennzeichnet, dass** auf der Trägerplatte (2) symmetrisch zu einer Ebene durch die Zentralachse (4), parallel zu der ersten Hauptgleitschiene (6a), eine zweite Hauptgleitschiene (6b), mit einem zweiten Antriebs-Zugelement (7a), einem zweiten Gegenkraftelement und einem zweiten Kraftübertragungselement (13a) für eine Drehung der Trägerplatte (2) in die vorgegebene Drehrichtung angeordnet ist.

13. Vorrichtung zur Kraftübertragung nach Anspruch 12, **dadurch gekennzeichnet, dass** beabstandet um die Drehlagerung der Trägerscheibe (2) ein Ringelement (16) vorgesehen ist, ein erstes stabförmiges Gegenzugelement (15a),
das an einem Ende drehbar mit dem Gegenzug-Verbindungselement (14a) der ersten Hauptgleitschiene (6a) und an dem anderen Ende beweglich mit dem Ringelement (16) verbunden ist, und ein zweites stabförmiges Gegenzug-Element (15b) an einem Ende drehbar mit einem zweiten Gegenzug-Verbindungselement (14b) der zweiten Hauptgleitschiene (6b) und mit dem anderen Ende beweglich mit dem Ringelement (16) verbunden ist.

14. Vorrichtung zur Kraftübertragung nach einem der vorangehenden Ansprüche, **dadurch gekennzeichnet, dass** das bewegliche Teil der ersten Hauptgleitschiene (6a) als Flachelement ausgebildet ist,
das feste Teil der ersten Hauptgleitschiene (6b) Radelemente umfasst, die drehbar auf der Trägerplatte (2) befestigt und derart angeordnet sind, dass sie eine Führung des beweglichen Teils der Gleitschiene in Längsrichtung gewährleisten, wobei die Radelemente und die Längsseiten des Flachelements mit zueinander korrespondierenden Führungselementen ausgebildet sind.

15. Vorrichtung zur Kraftübertragung nach Anspruch 14, **dadurch gekennzeichnet, dass** die Radelemente Kugellager und Zahnkränze aufweisen, die die Führungselement bilden und das Flachelement entlang seinen Längsseiten als Führungselemente korrespondierenden Abrollflächen und Zähne aufweist.

## Claims

1. Device for power transmission
- with a drive plate (1), a support plate (2) and an output plate (3), each having in a region around its center a rotatable mount (5), with which they are arranged rotatably on a central axis (4) one above the other
- wherein a first main slide rail (6a) is arranged on the support plate (2) spaced from the rotatable mount of the support plate (2), having a rigid part, which is firmly connected to the support plate (2), and a moving part, which is movable relative to the rigid part in the direction of the longitudinal axis of the first main slide rail (6a),
- with a first drive train element (7a),
**characterized in that**
the first drive train element (7a) is rotatably connected at a first end by means of a first drive train connecting element (8a) to the moving part of the first main slide rail (6a) and at a second end by means of a second drive train connecting element (9a) to the drive plate (1),
wherein the device furthermore comprises
- a first counterforce element, which is arranged such that in case of a predetermined driving force acting on the first drive train element (7a) a counter force on the moving part of the first main slide rail (6a) is generated by means of the first counterforce element, such that the total force from the driving force and the counterforce acting on the first main slide rail (6a) exhibits both a parallel and a vertical component to the longitudinal axis of the first main slide rail (6a), and leads to a rotational movement of the support plate (2) connected to the first main slide rail (6a) in a predetermined direction of rotation,
- a first power transmission element (13a) arranged on the support plate (2) so as to cause a rotational power transmission connection on the moving part of the first main slide rail (6a) during the rotational movement of the support plate (2), and
- a first output element (10a) that is connected with a first end to the output plate (3) and is arranged such that during the rotational movement of the support plate (2) an output power transmission connection exists from the moving part of the first main slide rail (6a) to the first output element (10a).

2. A power transmission device according to claim 1, wherein the first main slide rail (6a) is arranged symmetrical to a horizontal axis through the center of the support plate (2), that a first transverse element (11a) is provided in a central region of the moving part of the first main slide rail (6a), which protrudes transversely to the longitudinal axis of the first main slide rail (6a) over the first main slide rail (6a), such that the power transmission element (13) abuts against the transverse element (11a) during the rotational movement of the support plate (2).

3. A power transmission device according to claim 2, wherein the first output element (10a) is arranged such that the first transverse element (11a) abuts against the first output element (10a) during the rotational movement of the support plate (2).

4. A power transmission device according to claim 3, wherein the first output element (10a) is arranged such that it simultaneously forms the first counterforce element.

5. A power transmission device according to claim 1 or 2, wherein the first counterforce element is rotatably connected with a first end by means of a first counterforce connecting element at a predetermined distance from the first drive train element (7a) with the moving part of the first main slide rail (6a) and at a second end by means of a second counterforce connecting element to the output plate (3).

6. A power transmission device according to one of the preceding claims, wherein the first main slide rail is arranged symmetrical to an axis through the center of the support plate (2), the first drive train connecting element (8a) arranged at a first end of the first main slide rail (6a) and a first counter draw connecting element (14a) is disposed at the second end of the first main rail (6a), at which at least a first counter draw member (15a, 15b) is rotatably mounted, wherein the first counter draw member (15a, 15b) forms an acute angle with the longitudinal axis of the first main slide rail (6a).

7. A power transmission device according to claim 6, wherein the first counter draw element (15a, 15b) is a mass element (17a, 17b), which is formed substantially as rod-shaped, with its first end rotatably mounted by means of the counter draw connecting element on the moving part of the main slide rail (6a), and at its second end provides a vertically protruding first weight element (18a) arranged opposite to the desired direction of movement of the support plate (2).

8. A power transmission device according to claim 7, wherein the rod-shaped portion of the first mass member (17a) is formed as a mass slide rail, the moving part thereof being connected to the moving part of the main slide rail (6a) and the first weight member (18a) is arranged on the moving part of the mass slide rail.

9. A power transmission device according to claim 7, wherein an angle element (21) with a first and a second rod-shaped leg (22, 23) is arranged as the counter draw element, wherein the first and the second leg (22, 23) are movably connected to one another at one end at an angle of approximately 90°, the first leg (22) being rotatably connected at its other end to the first counter draw connecting element (14a) and the second leg (23) being movably connected with the support plate (2).

10. A power transmission device according to one of the claims 6 to 9, wherein a ring element (16) is provided spaced around the rotatable mount of the support plate (2), the counter draw element (15) comprises a first and a second train element, the first train element is attached at one end to the counter train- connecting element (14a) of the first main slide rail (6a), at the second end to the ring member (16) and the first end of the second train member opposite at the ring member (16).

11. A power transmission device according to any one of the preceding claims, wherein the drive train member (7) is rod-shaped and arranged at one end of the first main slide rail (6a), so as to form an acute angle with the first main slide rail (6a).

12. A power transmission device according to one of the preceding claims, wherein on the support plate (2) a second main slide rail (6b) is arranged symmetrically to a plane through the central axis (4) and parallel to the first main slide rail (6a), with a second drive train element (7a), a second counterforce element and a second power transmission element (13a) for rotation of the support plate (2) in the predetermined direction of rotation.

13. A power transmission device according to claim 12, wherein a ring element (16) is provided at a distance around the rotatable mount of the support plate (2), and a first rod-shaped counter draw element (15a) that at one end is rotatably mounted at the first counter draw connecting element (14a) of the first main slide rail (6a) and at the other end is movably connected to the ring member (16), and a second rod-shaped counter draw member (15b) that at one end is rotatbly mounted to a second counter draw connecting member (14b) of the second main slide rail (6b) and at the other end is movably connected to the ring member (16).

14. A power transmission device according to any one of the preceding claims, wherein the moving part of the first main slide rail (6a) is formed as a flat member, the rigid part of the first main slide rail (6b) comprises wheel members being rotatably mounted on the support plate (2) and being arranged to ensure a guide of the moving part of the slide rail in the longitudinal direction, wherein the wheel elements and the longitudinal sides of the flat element are formed with mutually corresponding guide elements.

15. A power transmission device according to claim 14, wherein the wheel elements are provided with ball bearings and sprockets, which form the guide element and wherein the flat element has along its longitudinal sides corresponding rolling surfaces and teeth as guide elements.

## Revendications

1. Dispositif de transmission de force
- comprenant un plateau d'entraînement (1), un plateau de support (2) et un plateau de sortie (3), qui comprennent respectivement un palier rotatif (5) dans une région autour de leur centre, palier par le biais duquel ils sont superposés respectivement de manière rotative sur un axe central (4),
- dans lequel un premier rail de glissement principal (6a) est disposé sur le plateau de support (2) de manière espacée du palier rotatif du plateau de support (2), lequel rail comprend une partie fixe qui est reliée fixement au plateau de support (2) et une partie mobile qui est mobile par rapport à la partie fixe dans la direction de l'axe longitudinal du premier rail de glissement principal (6a),
- comprenant un premier élément de traction d'entraînement (7a),
**caractérisé en ce que**
le premier élément de traction d'entraînement (7a) est, à une première extrémité, relié de manière rotative à la partie mobile du premier rail de glissement principal (6a) par le biais d'un premier élément de liaison de traction d'entraînement (8a) et, à une deuxième extrémité, relié de manière rotative au plateau d'entraînement (1) par le biais d'un deuxième élément de liaison de traction d'entraînement (9a),
le dispositif comprenant en outre
- un premier élément de force antagoniste, lequel est disposé de telle sorte qu'en cas de force d'entraînement prédéfinie agissant sur le premier élément de traction d'entraînement (7a), une force antagoniste sur la partie mobile du premier rail de glissement principal (6a) est produite par le biais du premier élément de force antagoniste, de telle sorte que la force totale, constituée de la force d'entraînement et de la force antagoniste, agissant sur le premier rail de glissement principal (6a) présente à la fois une composante parallèle et une composante verticale par rapport à l'axe longitudinal du premier rail de glissement principal (6a), et mène à un mouvement rotatif du plateau de support (2) relié au premier rail de glissement principal (6a) dans un sens de rotation prédéfini,
- un premier élément de transmission de force (13a), qui est disposé sur le plateau de support (2) de telle sorte qu'il provoque une liaison de transmission de force rotative sur la partie mobile du premier rail de glissement principal (6a) en cas de mouvement rotatif du plateau de support (2), et
- un premier élément de sortie (10a), qui est relié au plateau de sortie (3) à une première extrémité et qui est disposé de telle sorte qu'en cas de mouvement rotatif du plateau de support (2), une liaison de transmission de force de sortie de la partie mobile du premier rail de glissement principal (6a) au premier élément de sortie (10a) existe.

2. Dispositif de transmission de force selon la revendication 1, **caractérisé en ce que** le premier rail de glissement principal (6a) est disposé symétriquement par rapport à un axe horizontal passant par le centre du plateau de support (2),
**en ce qu'**un premier élément transversal (11a) est prévu dans une région centrale de la partie mobile du premier rail de glissement principal (6a), lequel élément transversal dépasse au-delà du premier rail de glissement principal (6a) transversalement à l'axe longitudinal du premier rail de glissement principal (6a), de telle sorte que l'élément de transmission de force (13) bute contre l'élément transversal (11a) en cas de mouvement rotatif du disque de support (2).

3. Dispositif de transmission de force selon la revendication 2, **caractérisé en ce que** le premier élément de sortie (10a) est disposé de telle sorte qu'en cas de mouvement rotatif du plateau de support (2), le premier élément transversal (11a) bute contre le premier élément de sortie (10a).

4. Dispositif de transmission de force selon la revendication 3, **caractérisé en ce que** le premier élément de sortie (10a) est disposé de telle sorte qu'il forme simultanément le premier élément de force antagoniste.

5. Dispositif de transmission de force selon la revendication 1 ou 2, **caractérisé en ce que** le premier élément de force antagoniste est relié, par une première extrémité, à la partie mobile du premier rail de glissement principal (6a) de manière rotative à une distance prédéfinie du premier élément de traction d'entraînement (7a) par le biais d'un premier élément de liaison de force antagoniste et est relié, à une deuxième extrémité, au plateau de sortie (3) de manière rotative par le biais d'un deuxième élément de liaison de force antagoniste.

6. Dispositif de transmission de force selon l'une des revendications précédentes, **caractérisé en ce que** le rail de glissement principal est disposé symétriquement par rapport à un axe passant par le centre du plateau de support (2),
le premier élément de liaison de traction d'entraînement (8a) est disposé à une première extrémité du premier rail de glissement principal (6a), et un premier élément de liaison de traction antagoniste (14a) est disposé à la deuxième extrémité du rail de glissement (6a), sur lequel au moins un premier élément de traction antagoniste (15a, 15b) est fixé de manière rotative, l'élément de traction antagoniste (15a, 15b) formant un angle aigu avec l'axe longitudinal du premier rail de glissement principal (6a) .

7. Dispositif de transmission de force selon la revendication 6, **caractérisé en ce que** l'élément de traction antagoniste est un élément de masse (17a, 17b) qui est réalisé sensiblement en forme de barre, est, par sa première extrémité, monté de manière rotative sur la partie mobile du rail de glissement principal (6a) par le biais de l'élément de liaison de traction antagoniste, et comprend, à sa deuxième extrémité, un premier élément de poids (18a) dépassant perpendiculairement et disposé en sens inverse au sens de déplacement souhaité du plateau de support (2).

8. Dispositif de transmission de force selon la revendication 7, **caractérisé en ce que** la région en forme de barre du premier élément de masse (17a) est réalisée en tant que rail de glissement de masse, sa partie mobile étant reliée à la partie mobile du rail de glissement principal (6a) et le premier élément de poids (18a) étant disposé sur la partie mobile du rail de glissement de masse.

9. Dispositif de transmission de force selon la revendication 7, **caractérisé en ce qu'**un élément coudé (21) présentant une première et une deuxième branche en forme de barre (22, 23) est disposé en tant qu'élément de traction antagoniste,
la première et la deuxième branche (22, 23) étant reliées l'une à l'autre à une extrémité de manière mobile suivant un angle d'approximativement 90°, la première branche (22) étant, à son autre extrémité, reliée de manière rotative au premier élément de liaison de traction antagoniste (14a) et la deuxième branche (23) étant reliée de manière mobile au disque de support (2).

10. Dispositif de transmission de force selon l'une des revendications 6 à 9, **caractérisé en ce qu'**un élément annulaire (16) est prévu de manière espacée autour du palier rotatif du plateau de support (2), l'élément de traction antagoniste (15) comporte un premier et un deuxième élément de traction, le premier élément de traction étant, à une extrémité, fixé à l'élément de liaison de traction antagoniste (14a) du premier rail de glissement principal (6a), la deuxième extrémité étant fixée à l'élément annulaire (16) et la première extrémité du deuxième élément de traction étant fixée à l'élément annulaire (16) de manière opposée.

11. Dispositif de transmission de force selon l'une des revendications précédentes, **caractérisé en ce que** l'élément de traction d'entraînement (7) est en forme de barre, et est, à une extrémité du premier rail de glissement principal (6a), disposé de telle sorte qu'il forme un angle aigu avec le premier rail de glissement principal (6a).

12. Dispositif de transmission de force selon l'une des revendications précédentes, **caractérisé en ce qu'**un deuxième rail de glissement principal (6b), comprenant un deuxième élément de traction d'entraînement (7a), un deuxième élément de force antagoniste et un deuxième élément de transmission de force (13a) pour une rotation du plateau de support (2) dans le sens de rotation prédéfini, est disposé sur le plateau de support (2) symétriquement par rapport à un plan passant par l'axe central (4), parallèlement au premier rail de glissement principal (6a).

13. Dispositif de transmission de force selon la revendication 12, **caractérisé en ce qu'**un élément annulaire (16) est prévu de manière espacée autour du palier rotatif du disque de support (2), un premier élément de traction antagoniste (15a) en forme de barre, qui est, à une extrémité, relié de manière rotative à l'élément de liaison de traction antagoniste (14a) du premier rail de glissement principal (6a) et, à l'autre extrémité, relié de manière mobile à l'élément annulaire (16), et un deuxième élément de traction antagoniste (15b) en forme de barre est, à une extrémité, relié de manière rotative à un deuxième élément de liaison de traction antagoniste (14b) du deuxième rail de glissement principal (6b) et, par l'autre extrémité, relié de manière mobile à l'élément annulaire (16).

14. Dispositif de transmission de force selon l'une des revendications précédentes, **caractérisé en ce que** la partie mobile du premier rail de glissement principal (6a) est réalisée en tant qu'élément plan,
la partie fixe du premier rail de glissement principal (6b) comporte des éléments roues qui sont fixés de manière rotative sur le plateau de support (2) et disposés de telle sorte qu'ils assurent un guidage de la partie mobile du rail de glissement dans la direction longitudinale, les éléments roues et les côtés longitudinaux de l'élément plan étant réalisés de manière à présenter des éléments de guidage correspondant les uns aux autres.

15. Dispositif de transmission de force selon la revendication 14, **caractérisé en ce que** les éléments roues comprennent des paliers à billes et des couronnes dentées qui forment l'élément de guidage et l'élément plan comprend, le long de ses côtés longitudinaux, en tant qu'éléments de guidage, des surfaces de roulement et des dents correspondantes.
